# FASCICULE DE BREVET EUROPEEN

(11) **EP 2 640 627 B1**
(45) Date de publication et mention de la délivrance du brevet: **07.10.2015**
(21) Numéro de dépôt: 11832125.6
(22) Date de dépôt: 26.10.2011
(51) Int. Cl.: B62D 25/04

(54) **ELEMENT DE STRUCTURE D'UN VEHICULE CONSOLIDE PAR UN INSERT DE RENFORT**
DURCH EINEN VERSTÄRKUNGSEINSATZ GEFESTIGTES STRUKTURELEMENT FÜR EIN FAHRZEUG
STRUCTURAL ELEMENT OF A VEHICLE STRENGTHENED BY A REINFORCING INSERT

(30) Priorité: 16.11.2010 FR 1059411
(43) Date de publication de la demande: 25.09.2013
(73) Titulaire: Peugeot Citroën Automobiles SA, 78140 Vélizy Villacoublay (FR)
(72) Inventeur: TAMISIER, Damien, F-90700 CHATENOIS LES FORGES (FR); HIGELIN, Vincent, F-25200 Montbeliard (FR)
(86) Numéro de dépôt international: PCT/FR2011/052509
(87) Numéro de publication internationale: WO 2012/066208

(56) Documents cités:
- EP-A- 2 457 809
- EP-A1- 2 239 128
- WO-A2-2009/000988
- FR-A1- 2 720 710
- US-A- 2012 181 815

## Description

La présente invention concerne la structure d'un véhicule, notamment automobile. Elle concerne plus précisément les éléments de structure formés par des profilés emboutis ayant une section transversale en U, comme par exemple les pieds encadrant les portières du véhicule, sur lesquels sont fixées les charnières portant les portières.

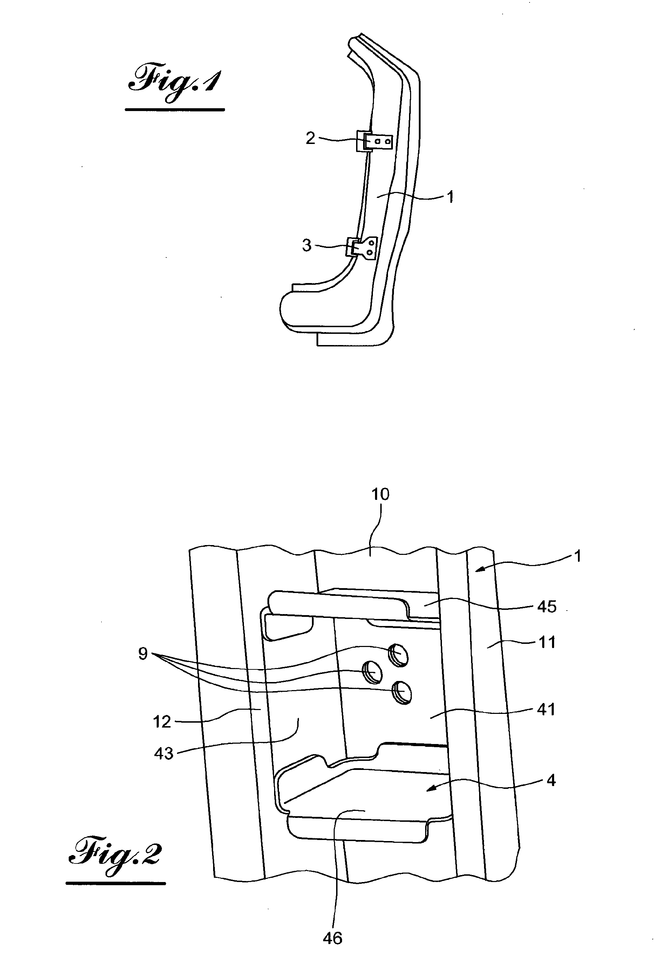

La structure d'un véhicule comprend des éléments de structure sensiblement longitudinaux, parmi lesquels des pieds milieu qui portent les charnières des portières arrière du véhicule, et des pieds avant qui portent les charnières des portières avant du véhicule. Un tel pied avant 1 est représenté sur la figure 1, vu de l'extérieur du véhicule.

Pour présenter une rigidité et une solidité suffisantes pour résister à un choc, et, dans le cas des pieds milieu et des pieds avant, pour supporter efficacement les portières, ces éléments de structure sont formés par des profilés emboutis ayant une section transversale en forme de U, dont l'ouverture est tournée vers l'intérieur du véhicule. En certains endroits, et notamment aux endroits où doivent être fixées les charnières, la solidité de ces éléments de structure doit être renforcée.

La figure 2 représente ainsi une portion du pied avant 1, vu de l'intérieur du véhicule. Ce pied avant 1 est renforcé par l'ajout, dans la section en forme de U du pied, d'un insert de renfort 4 qui permet de renforcer l'épaisseur et la rigidité du pied. Cet insert de renfort 4 est constitué par une structure métallique en forme de boîte ouverte à cinq faces, dont un fond 41 faisant face à une ouverture et quatre parois latérales. Il est inséré dans le pied de telle sorte que son ouverture soit dans la même direction que l'ouverture du U formé par le pied, et est solidarisé à ce pied.

La charnière devant porter la portière peut ensuite être assemblée, par exemple par vissage dans des trous 9 traversant à la fois le fond 10 du pied 1 et le fond 41 de l'insert de renfort 4.

La solidarisation de l'insert de renfort dans le pied est cependant difficile à réaliser et reste souvent insatisfaisante. En effet, pour que l'insert de renfort puisse être introduit dans la section en forme de U du pied, il est nécessaire de prévoir un jeu suffisant entre les flancs latéraux du pied, formant les branches du U, et les parois latérales correspondantes de l'insert de renfort. Pour être sûr de pouvoir introduire l'insert de renfort, le jeu nécessaire doit être d'autant plus important que les tolérances de dimensionnement sont importantes pour la fabrication de l'insert de renfort et du pied.

Une fois l'insert de renfort introduit dans le pied, ce jeu génère un espace entre l'un des deux flancs latéraux du pied et la paroi correspondante de l'insert de renfort. L'insert de renfort et le pied étant rigides, du fait de leur forme et de l'épaisseur des tôles utilisées, ils ne peuvent pas être facilement rapprochés l'un contre l'autre afin d'être soudés efficacement. Le jeu rend donc impossible le soudage des deux flancs latéraux du pied sur les parois correspondantes de l'insert de renfort.

Un seul de ces flancs est en conséquence soudé à l'insert de renfort, par des pinces de soudage formant des points de soudure. L'absence de soudure entre l'autre flanc et l'insert de renfort cause une fragilité au niveau du pied. En effet, quand le mouvement d'ouverture de la portière tend à faire pivoter la partie de la charnière fixée au pied, le côté non soudé de l'insert de renfort est repoussé vers l'ouverture du pied, sans que l'effort généré ne soit repris par une soudure. Ce mouvement génère alors une contrainte ponctuelle sur le pied, au niveau du bord de la charnière, sous forme d'un cisaillement transverse dans l'épaisseur de ce pied.

Le mouvement de la portière peut en conséquence causer un endommagement du pied, malgré la présence de l'insert de renfort. Un example de l'état de la technique antérieure est representé par le document WO2009/000988.

La présente invention a pour objectif de pallier ces inconvénients de l'art antérieur.

En particulier, la présente invention a pour objectif de permettre une consolidation efficace d'un élément de structure d'un véhicule présentant une section transversale en forme de U par un insert de renfort solidarisé dans cet élément de structure.

Un objectif particulier de l'invention est de permettre une solidarisation efficace d'un insert de renfort dans un élément de structure, et particulièrement dans un pied du véhicule, pour consolider la solidarisation au pied des charnières des portières du véhicule.

L'invention a également pour objectif de permettre une telle consolidation efficace en utilisant des éléments simples et peu coûteux, ayant notamment des tolérances de dimensionnement élevées.

Ces objectifs, ainsi que d'autres qui apparaîtront plus clairement par la suite, sont atteints à l'aide d'un élément de structure d'un véhicule automobile, selon les caractéristiques de la revendication 1.

Avantageusement, la languette souple est formée dans la seconde paroi latérale de l'insert de renfort.

Avantageusement, la languette souple est formée par découpe de la seconde paroi latérale de l'insert de renfort.

Avantageusement, la languette souple s'étend dans un plan sensiblement parallèle au plan de la seconde paroi latérale de l'insert de renfort, vers l'extérieur de l'insert de renfort.

Avantageusement, la languette souple est formée dans le second flanc latéral de l'élément de structure.

Avantageusement, la languette souple est formée par découpes du second flanc latéral de l'élément de structure.

Avantageusement, l'élément de structure constitue un pied portant les charnières d'une portière du véhicule.

Avantageusement, l'élément de structure porte une charnière assemblée par au moins une vis traversant le fond de l'insert de renfort et le fond de l'élément de structure.

L'invention concerne également un insert de renfort destiné à être assemblé dans une section transversale en forme de U d'un élément de structure d'un véhicule automobile, selon les caractéristiques de la revendication 9.

L'invention concerne encore un véhicule automobile comprenant un élément de structure tel que décrit ci-dessus.

D'autres objectifs et avantages de l'invention apparaitront plus clairement à la lecture de la description qui suit de modes de réalisation de l'invention, accompagnés de figure illustratives et non limitatives, parmi lesquelles :
- la figure 1, qui a été commentée ci-dessus, représente un pied avant de la structure d'un véhicule automobile, connu de l'art antérieur, sur lequel sont fixées deux charnières de portière ;
- la figure 2, qui a été commentée ci-dessus, est une vue de détail du pied avant de la figure 1, consolidé par un insert de renfort selon l'art antérieur, pour la fixation d'une charnière ;
- la figure 3 est une vue de coupe du pied avant consolidé par l'insert de renfort représenté à la figure 2 ;
- la figure 4 est une vue de détail du pied avant de la figure 1, consolidé par un insert de renfort selon un premier mode de réalisation de l'invention, pour la fixation d'une charnière ;
- la figure 5 est une vue de coupe du pied avant consolidé par l'insert de renfort représenté à la figure 4 ;
- la figure 6 est une vue de détail d'un pied avant selon un second mode de réalisation de l'invention, consolidé par un insert de renfort pour la fixation d'une charnière.

La figure 1 montre un pied avant 1 de la caisse d'un véhicule automobile, destiné à s'élever sensiblement verticalement du côté droit de la caisse, et sur la face extérieure duquel sont fixées une charnière haute 2 et une charnière basse 3 qui sont destinées à porter la portière avant du véhicule.

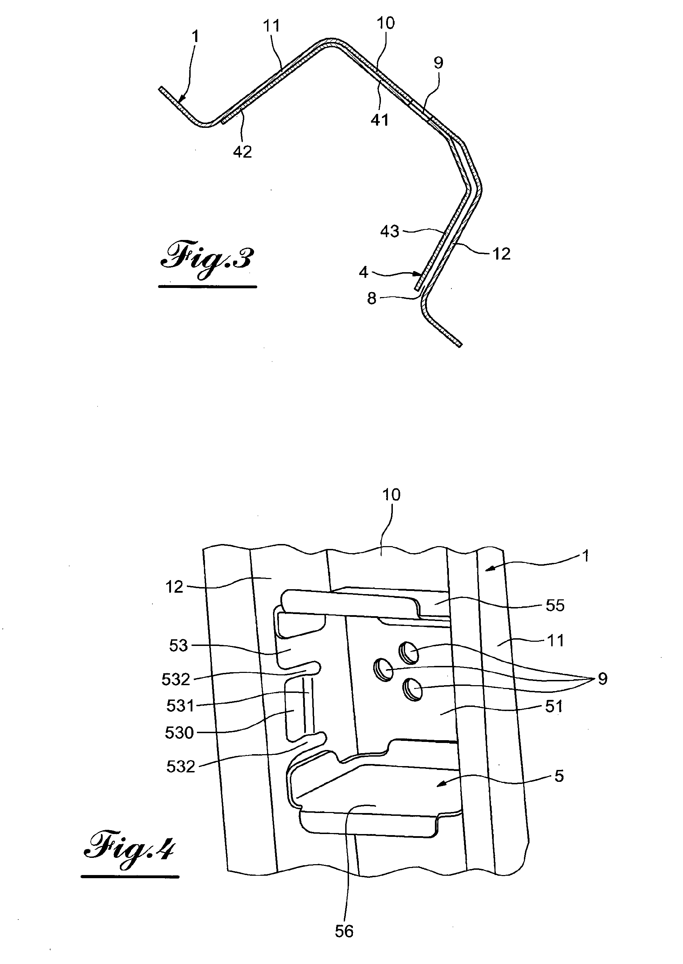

La figure 2 est une vue de détail du pied 1, au niveau de la fixation de la charnière basse 3 (non représentée), montrant la face intérieure du pied 1, opposée à la face extérieure sur laquelle est fixée la charnière. La figure 3 montre une section transversale de ce pied 1. Comme le montre ces figures, le pied 1 présente une section transversale sensiblement en forme de U, ouverte vers l'intérieur du véhicule, comprenant un fond 10 et deux flancs latéraux 11 et 12.

Pour permettre une bonne résistance du pied 1 au niveau où est fixée la charnière, un insert de renfort 4 est inséré dans la forme de U du pied. Cet insert de renfort 4 est, selon l'art antérieur à la présente invention, constitué par une structure métallique à cinq faces, en forme de boîte ouverte, comportant un fond 41 dont la forme correspond sensiblement au fond 10 du pied 1, deux parois latérales 42 et 43 dont les formes correspondent sensiblement aux flancs latéraux du pied, respectivement 11 et 12, formant les branches du U, une cloison supérieure 45 et une cloison inférieure 46.

Les cloisons supérieure 45 et inférieure 46 ne participent pas à améliorer la tenue de la charnière, mais sont nécessaires pour améliorer la résistance au choc du pied 1. Les parois latérales 42 et 43 de l'insert de renfort sont formées dans le même élément de tôle que le fond 41, et les cloisons supérieures 45 et inférieure 46 sont soudées à cet élément de tôle. L'insert de renfort 4 présente ainsi une forme de boîte sensiblement parallélépipédique.

Des trous de fixation 9 sont percés dans le fond 41 de l'insert de renfort 44 et dans le fond 10 du pied 1, pour permettre le passage des vis de fixation et d'un plot de centrage de la charnière. Le fond 41 de l'insert de renfort 4 et le fond 10 du pied 1 peuvent être solidarisés l'un à l'autre par un point de soudure, pour faciliter le montage de la charnière. Cependant, quand la charnière est montée, le maintient de ces fonds l'un contre l'autre est assuré par le serrage des vis de fixation de la charnière.

La paroi latérale 42 de l'insert de renfort 4 est plaquée contre le flanc latéral 11 correspondant du pied 1, et lui est solidarisée par des points de soudure, réalisés par des pinces de soudure.

En revanche, la paroi latérale 43 de l'insert de renfort 4 est séparée du flanc latéral correspondant du pied 1 par un jeu fonctionnel 8 qui empêche la réalisation de points de soudure de bonne qualité par les pinces de soudure. En effet, le pied 1 d'une part et l'insert de renfort 4 d'autre part présentent une rigidité élevée, due à la structure en boîte fermée de l'insert de renfort 4 et à l'épaisseur de la tôle constituant le pied 1. Les pinces de soudure ne permettent donc pas d'exercer une pression suffisante sur la paroi latérale 43 et le flanc latéral 12 du pied pour plaquer ces éléments l'un contre l'autre et réaliser une soudure de bonne qualité.

En conséquence, la paroi latérale 43 de cet insert de renfort de l'art antérieur reste libre par rapport au flanc latéral correspondant, ce qui rend moins efficace la consolidation du pied.

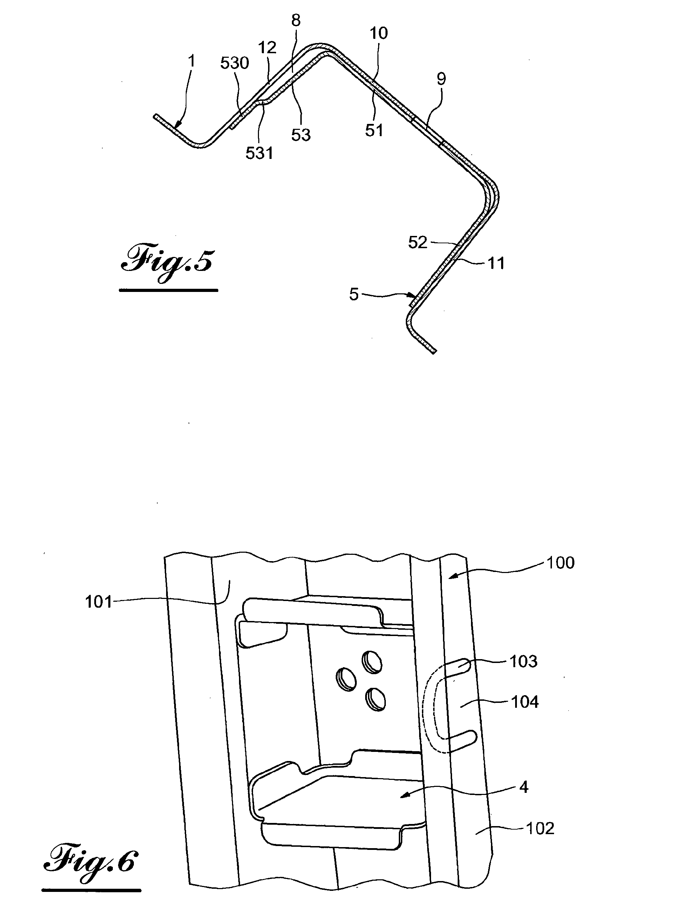

La figure 4 est une autre vue de détail du pied 1, au niveau de la fixation de la charnière basse 3, montrant la face intérieure du pied 1. La figure 5 montre une section transversale de ce pied 1. Sur ces figures, un insert de renfort 5 selon un mode de réalisation de l'invention est inséré dans la forme de U du pied, à la place de l'insert de renfort 4 de l'art antérieur.

Cet insert de renfort 5 est, comme l'insert de renfort de l'art antérieur, constitué par une structure métallique à cinq faces en forme de boîte ouverte, comportant un fond 51 dont la forme correspond sensiblement au fond 10 du pied 1, deux parois latérales 52 et 53 formées dans le même élément de tôle que le fond 51 et destinées à faire face aux flancs latéraux du pied, respectivement 11 et 12, une cloison supérieure 55 et une cloison inférieure 56 assemblées par soudage.

La paroi latérale 53 présente deux découpes 532 destinées à former une languette 530 au milieu de cette paroi. Cette languette 530, n'étant liée à l'insert de renfort 5 que par un seul de ses côtés, présente une certaine souplesse. Par ailleurs, cette languette 530 présente des plis 531 permettant de la placer dans un plan décalé vers l'extérieur par rapport au plan de la paroi latérale 53.

Quand l'insert de renfort 5 est inséré dans le U formé par le pied 1, la languette 530 ne fait pas obstacle à cette insertion, du fait de sa souplesse. Ainsi, si cette languette entre en contact avec le flanc latéral 12 du pied 1, ce contact la repousse vers l'intérieur de l'insert de renfort 5, sans empêcher la mise en place de celui-ci. Une fois l'insert de renfort mis en place, la paroi latérale 52 étant en contact contre le flanc latéral 11 du pied 1 pour y être soudée, la partie périphérique de la paroi latérale 53 est séparée du flanc latéral correspondant du pied 1 par un jeu de montage 8. La languette 530 est en revanche, du fait de son pliage, plus proche de ce flanc latéral, et peut être en contact avec celui-ci.

Cette proximité de la languette 530, ou son contact avec le flanc latéral 12, permet de solidariser cette languette 530 au flanc 12 du pied par soudage par une pince de soudage, selon le procédé déjà utilisé pour le soudage de la paroi latérale 52 au flanc latéral 11 du pied 1. Ce soudage de la languette 530 se fait très facilement si la languette est en contact avec le flanc latéral correspondant du pied 1. Si cette languette est séparée de ce flanc, la souplesse de la languette 530 permet qu'elle soit amenée en contact avec le flanc 12 par la simple pression de la pince de soudage.

A la différence de la paroi latérale rigide 43 de l'insert de renfort 4 de l'art antérieur, la languette 530 est donc suffisamment souple pour être solidarisée par soudage au pied 1. Il est à noter que le décalage de cette languette 530 par rapport au plan de la paroi latérale 52 n'est pas indispensable, seule la souplesse de la languette 530 étant nécessaire pour qu'elle soit plaquée et soudée contre le flanc latéral 12 du pied. La présence de cette languette souple 530 permet ainsi une meilleure solidarisation de l'insert de renfort 5. Les déplacements de cet insert de renfort 5 par rapport au pied 1, lors des mouvements de la portière, sont ainsi bloqués.

Il est à noter que, malgré les découpes 532, les portions de la paroi latérale 53 entourant la languette 530 gardent une rigidité importante, grâce notamment à la présence des cloisons supérieure 55 et inférieure 56. L'insert de renfort 5 peut ainsi exercer efficacement sa fonction de renfort du pied 1.

La figure 6 est une vue de détail d'un pied 100 selon un mode de réalisation alternatif de l'invention. Ce pied 100, qui présente une structure similaire au pied 1, est équipé d'un insert de renfort 4 selon l'art antérieur, introduit dans l'ouverture en U du pied. Pour permettre la solidarisation par soudage des deux parois latérales rigides de cet insert de renfort aux flancs latéraux 101 et 102 du pied, malgré la présence d'un jeu de montage, une découpe 103 est prévue dans un flanc latéral 102 du pied 10, afin d'y ménager une languette 104.

La souplesse de cette languette 104 lui permet d'être facilement soudée, en utilisant une pince de soudage, à la paroi latérale correspondante de l'insert de renfort 4. Cette solution technique, dans laquelle la languette souple 104 est ménagée dans le flanc du pied plutôt que sur la paroi latérale de l'insert de renfort 4, est équivalente à la solution technique représentée aux figures 3 et 4.

Il est à noter que, bien que les exemples présentés concernent des pieds destinés à porter les portières d'un véhicule automobile, la présente invention est applicable également à tout autre élément de structure d'un véhicule automobile présentant une section transversale en forme de U.

## Revendications

1. Elément de structure d'un véhicule automobile, constituant une partie d'un pied (1) portant les charnières (2, 3) d'une portière du véhicule, présentant une section transversale en forme de U, comprenant un fond (10) et deux flancs latéraux (11, 12), et comprenant un insert de renfort (5) en forme de boîte ouverte à cinq faces, dont un fond (51) faisant face à une ouverture et quatre parois latérales (52, 53, 55, 56), inséré dans la section en forme de U de façon que le fond (51) de l'insert de renfort (5) soit fixé en regard du fond (10) de l'élément de structure, une première des parois latérales (52) de l'insert de renfort étant fixée à un premier flanc latéral (11) de l'élément de structure lui faisant face, **caractérisé en ce que** le second flanc latéral (12) de l'élément de structure, ou une seconde des parois latérales (53) de l'insert de renfort (5) faisant face audit second flanc latéral (12), présente une languette souple (530) permettant la fixation dudit second flanc latéral (12) avec la parois latérales (53) de l'insert de renfort (5) lui faisant face.

2. Elément de structure selon la revendication 1, **caractérisé en ce que** la languette souple (530) est formée dans la seconde paroi latérale (53) de l'insert de renfort (85).

3. Elément de structure selon la revendication 2, **caractérisé en ce que** la languette souple (530) est formée par découpe de la seconde paroi latérale (53) de l'insert de renfort (5).

4. Elément de structure selon l'une quelconque des revendications 2 et 3, **caractérisé en ce que** la languette souple (530) s'étend dans un plan sensiblement parallèle au plan de la seconde paroi latérale (53) de l'insert de renfort, vers l'extérieur de l'insert de renfort (5).

5. Elément de structure selon la revendication 1, **caractérisé en ce que** la languette souple (104) est formée dans le second flanc latéral (102) de l'élément de structure (100).

6. Elément de structure selon la revendication 5, **caractérisé en ce que** la languette souple (104) est formée par découpes du second flanc latéral (102) de l'élément de structure (100).

7. Elément de structure selon l'une quelconque des revendications précédentes, **caractérisé en ce qu'**il porte une charnière (2, 3) assemblée par au moins une vis traversant le fond (51) de l'insert de renfort (5) et le fond (10) de l'élément de structure.

8. Insert de renfort destiné à être assemblé dans une section transversale en forme de U d'un élément de structure d'un véhicule automobile, constituant une partie d'un pied (1) portant les charnières (2, 3) d'une portière du véhicule, selon l'une quelconque des revendications précédentes, **caractérisé en ce qu'**il présente une forme de boîte ouverte à cinq faces, dont un fond (51) faisant face à une ouverture et quatre parois latérales (52, 53, 55, 56), **caractérisé en ce qu'**il comporte une languette souple (530) portée par l'une de ses parois latérales (53) destinée à faire face à l'un des flancs latéraux (12) de l'élément de structure, apte à être fixée audit flanc latéral.

9. Véhicule automobile **caractérisé en ce qu'**il comprend un élément de structure selon l'une quelconque des revendications 1 à 7.

## Patentansprüche

1. Strukturelement eines Kraftfahrzeugs, das einen Teil eines Fußes (1) bildet, der die Scharniere (2, 3) einer Fahrzeugtür trägt, das einen Querschnitt in U-Form aufweist, das einen Boden (10) und zwei seitliche Flanken (11, 12) umfasst und einen Verstärkungseinsatz (5) in Form einer offenen Schachtel mit fünf Seiten umfasst, deren Boden (51) einer Öffnung und vier Seitenwänden (52, 53, 55, 56) gegenüberliegt, derart in den Querschnitt in U-Form eingefügt, dass der Boden (51) des Verstärkungseinsatzes (5) gegenüber dem Boden (10) des Strukturelements angeordnet ist, wobei eine erste der Seitenwände (52) des Verstärkungseinsatzes an einer ersten seitlichen Flanke (11) des Strukturelements befestigt ist, indem sie ihr gegenüberliegt, **dadurch gekennzeichnet, dass** die zweite seitliche Flanke (12) des Strukturelements oder eine zweite der Seitenwände (53) des Verstärkungseinsatzes (5), die der zweiten seitlichen Flanke (12) gegenüberliegt, eine biegsame Lasche (530) aufweist, die die Befestigung der zweiten seitlichen Flanke (12) mit der Seitenwand (53) des Verstärkungseinsatzes (5), die ihr gegenüberliegt, erlaubt.

2. Strukturelement nach Anspruch 1, **dadurch gekennzeichnet, dass** die biegsame Lasche (530) in der zweiten Seitenwand (53) des Verstärkungseinsatzes (85) ausgebildet ist.

3. Strukturelement nach Anspruch 2, **dadurch gekennzeichnet, dass** die biegsame Lasche (530) durch Ausschneiden der zweiten Seitenwand (53) des Verstärkungseinsatzes (5) ausgebildet ist.

4. Strukturelement nach einem der Ansprüche 2 und 3, **dadurch gekennzeichnet, dass** sich die biegsame Lasche (530) in einer Ebene im Wesentlichen parallel zu der Ebene der zweiten Seitenwand (53) des Verstärkungseinsatzes zur Außenseite des Verstärkungseinsatzes (5) hin erstreckt.

5. Strukturelement nach Anspruch 1, **dadurch gekennzeichnet, dass** die biegsame Lasche (104) in der zweiten seitlichen Flanke (102) des Strukturelements (100) ausgebildet ist.

6. Strukturelement nach Anspruch 5, **dadurch gekennzeichnet, dass** die biegsame Lasche (104) durch Ausschnitte der zweiten seitlichen Flanke (102) des Strukturelements (100) ausgebildet ist.

7. Strukturelement nach einem der vorhergehenden Ansprüche, **dadurch gekennzeichnet, dass** es ein Scharnier (2, 3) trägt, das durch mindestens eine Schraube, die den Boden (51) des Verstärkungselements (5) und den Boden (10) des Strukturelement durchquert, befestigt ist.

8. Verstärkungseinsatz, der dazu bestimmt ist, in einem Querschnitt in U-Form eines Strukturelements eines Kraftfahrzeugs zusammengefügt zu werden, der einen Teil eines Fußes (1) bildet, der die Scharniere (2, 3) einer Tür des Fahrzeugs trägt, nach einem der vorhergehenden Ansprüche, **dadurch gekennzeichnet, dass** er eine Form einer offenen Schachtel mit fünf Seiten aufweist, deren Boden (51) einer Öffnung und vier Seitenwänden (52, 53, 55, 56) gegenüberliegt, **dadurch gekennzeichnet, dass** er eine biegsame Lasche (530) umfasst, die von einer ihrer Seitenwände (53) getragen wird, die dazu bestimmt ist, einer der seitlichen Flanken (12) des Strukturelements gegenüberzuliegen, die geeignet ist, an der seitlichen Flanke befestigt zu werden.

9. Kraftfahrzeug, **dadurch gekennzeichnet, dass** es ein Strukturelement nach einem der Ansprüche 1 bis 7 umfasst.

## Claims

1. A structural element of a motor vehicle, constituting a portion of a pillar (1) carrying the hinges (2, 3) of a door of the vehicle, having a U-shaped cross-section, comprising a bottom (10) and two side flanks (11, 12), and comprising a reinforcing inert (5) in the form of an open box having five faces, namely a bottom (51) facing an opening and four side walls (52, 53, 55, 56), inserted into the U-shaped section such that the bottom (51) of the reinforcing inert (5) is fixed opposite the bottom (10) of the structural element, a first of the side walls (52) of the reinforcing insert being fixed to a first side flank (11) of the structural element facing the latter, **characterized in that** the second side flank (12) of the structural element, or a second of the side walls (53) of the reinforcing insert (5) facing said second side flank (12), has a flexible tongue (530) that enables the fixing of said second side flank (12) with the side wall (53) of the reinforcing insert (5) facing the latter.

2. The structural element according to claim 1, **characterized in that** the flexible tongue (530) is formed in the second side wall (53) of the reinforcing insert (85).

3. The structural element according to claim 2, **characterized in that** the flexible tongue (530) is formed by cutout of the second side wall (53) of the reinforcing insert (5).

4. The structural element according to any one of claims 2 and 3, **characterized in that** the flexible tongue (530) extends in a plane substantially parallel to the plane of the second side wall (53) of the reinforcing insert, towards the exterior of the reinforcing insert (5).

5. The structural element according to claim 1, **characterized in that** the flexible tongue (104) is formed in the second side flank (102) of the structural element (100).

6. The structural element according to claim 5, **characterized in that** the flexible tongue (104) is formed by cutouts of the second side flank (102) of the structural element (100).

7. The structural element according to any one of the preceding claims, **characterized in that** it carries a hinge (2, 3) assembled by at least one screw passing through the bottom (51) of the reinforcing insert (5) and the bottom (10) of the structural element.

8. A reinforcing insert intended to be assembled in a U-shaped cross-section of a structural element of a motor vehicle, constituting a portion of a pillar (1) carrying the hinges (2, 3) of a door of the vehicle, according to any one of the preceding claims, **characterized in that** it has the form of an open box having five faces, namely a bottom (51) facing an opening and four side walls (52, 53, 55, 56), **characterized in that** it comprises a flexible tongue (530) carried by one of its side walls (53) intended to face one of the side flanks (12) of the structural element, able to be fixed to said side flank.

9. A motor vehicle, **characterized in that** it includes a structural element according to any one of claims 1 to 7.
